# EUROPÄISCHE PATENTSCHRIFT

(11) **EP 3 440 367 B1**
(45) Veröffentlichungstag und Bekanntmachung des Hinweises auf die Patenterteilung: **03.03.2021**
(21) Anmeldenummer: 17730646.1
(22) Anmeldetag: 07.04.2017
(51) Int. Cl.: F16B 47/00

(54) **SAUGNAPFHALTERUNG MIT EINER SAUGPLATTE UND EINEM GEHÄUSE**
SUCTION CUP HOLDER COMPRISING A SUCTION PLATE AND A CASING
DISPOSITIF DE RETENUE À VENTOUSE, POURVU D'UNE PLAQUE VENTOUSE ET D'UN BOÎTIER

(30) Priorität: 08.04.2016 DE 102016004065; 01.07.2016 DE 102016008003; 26.08.2016 DE 102016010257
(43) Veröffentlichungstag der Anmeldung: 13.02.2019
(73) Patentinhaber: Tormaxx GmbH, 41199 Mönchengladbach (DE)
(72) Erfinder: KOCH, Hubert, 41199 Mönchengladbach (DE)
(74) Vertreter: Castell, Klaus
(86) Internationale Anmeldenummer: PCT/DE2017/000095
(87) Internationale Veröffentlichungsnummer: WO 2017/174056

(56) Entgegenhaltungen:
- DE-U1-202014 102 883
- DE-U1-202014 102 883
- GB-A- 835 533
- SU-A1- 635 027
- US-A1- 2007 187 965
- US-A1- 2011 127 395
- US-A1- 2013 127 194

## Beschreibung

Die Erfindung betrifft eine Saugnapfhalterung mit einer Saugplatte und einem Gehäuse, wobei Saugplatte und Gehäuse derart miteinander verbunden sind, dass das Gehäuse an die Saugplatte gepresst werden kann.

Der Saugnapf hat eine Saugfläche oder Saugplatte, die auf einer im Wesentlichen ebenen Fläche positionierbar ist, und einer Hebeleinrichtung, um einen mittleren Bereich dieser Saugplatte gegenüber einem Halterahmen, der sich auf einem Umfangsbereich der Saugplatte abstützt, anzuheben.

Derartige Saugnäpfe sind als Haltehaken zur Befestigung an Fliesen und als Halteeinrichtung beispielsweise zur Befestigung von elektronischen Einrichtungen und Kameras an einer Fensterschreibe bekannt.

Im industriellen Bereich werden zum Anheben der Saugplatte pneumatische oder hydraulische Einrichtungen verwendet. Zur Befestigung von weniger schweren Einrichtungen, beispielsweise an einer Fensterscheibe, wird die Saugplatte gegenüber einem Halterahmen mit einer Hebeleinrichtung angehoben. Bei derartigen Einrichtungen wird versucht, mit dem Hebel einen mittleren Bereich der Saugplatte möglichst stark gegenüber der mit dem Halterahmen an der ebenen Fläche angepressten Saugplatte anzuheben. Je stärker der mittlere Bereich mit dem Hebel angehoben wird, desto fester saugt sich die Saugplatte an der ebenen glatten Fläche an und desto fester wird die Verbindung zwischen Saugnapf und Oberfläche.

Daher wurde versucht, durch verbesserte Hebeleinrichtungen diese Kraft zu erhöhen.

Ein Problem liegt dabei darin, dass derartige Saugnapfhalterungen in der Regel wackeln und schwingen.

Herkömmliche Saugnapfhalter haben eine Saugplatte und ein darauf aufgesetztes Gehäuse, an das in verschiedener Art und Weise Zugelemente befestigt werden, die die Saugplatte von der Oberfläche wegziehen, wo das benötigte Vakuum aufgebaut wird, um die Saugplatte gegen die Oberfläche zu pressen.

Stand der Technik ist, dass die Gehäuse auf der Saugplatte aufliegen und Druck auf die Sauglatte ausüben. Dadurch hat auch das Gehäuse eine gewisse Stabilität. Da aber die Saugplatte aus weichen Materialien gefertigt werden muss, um eine Abdichtung an der Oberfläche zu erreichen, ist das Gehäuse bei Belastung oder Vibrationen in der Lage, sich von der Saugplatte abzuheben. Das hat für die auf dem Gehäuse befestigten Teile wie Kameras oder Handyhalter zur Folge, dass diese bei Belastung stark wackeln. Durch diese Problematik ist auch die Last, die an die Saugnapfhalter montiert werden kann, sehr eingeschränkt.

Der Erfindung liegt die Aufgabe zu Grunde, gattungsgemäße Saugnapfhalterungen weiterzuentwickeln.

Diese Aufgabe wird mit einer Saugnapfhatterung mit den Merkmalen des Patentanspruchs 1 gelöst.

Vorteilhafte Weiterbildungen sind Gegenstand der Unteransprüche.

Bei einer vorteilhaften Ausgestaltung ist die Saugplatte so ausgebildet, dass die Saugplatte mit dem Gehäuse verbunden ist. Der Rand der Saugplatte ist größer als das Gehäuse. Der Rand der Saugplatte ist so beschaffen, dass er den unteren Rand des Gehäuses umschließt. Das Gehäuse hat einen umlaufenden Rand, die Saugplatte hat eine umlaufende Nut, in der der Rand des Gehäuses liegt.

Wenn die beiden Komponenten starr mit einander verbunden wären, würden seitliche Belastungen zum Abheben der Saugplatte führen, was wiederum ein Abriss der Vakuum-Abdichtung zur Folge hat, worauf dann der Saugnapf abfallen würde.

Aus diesem Grunde hat eine Ausführung der Erfindung eine flexible Verbindung, deren Haltekraft so ausgelegt ist, dass die Saugplatte und das Gehäuse derart fest verbunden sind, damit die zu befestigenden Lasten ohne Probleme montiert werden können. Dabei werden die bei Normalbetrieb auftretenden Belastungen wie Vibrationen oder durch Beschleunigung auftretenden Kräfte aufgenommen. Erst wenn die Belastungen durch nicht betriebsbedingte Kräfte, wie z.B. ein Unfall oder ein Sturz, so hoch werden, dass die Seitenkräfte die Saugplatte anheben würden, löst sich das Gehäuse aus der Nut der Saugplatte. Die Saugplatte ist mit einem umlaufenden Gummiring gesichert, der bei Überschreiten der definierten Kraft, das Gehäuse derart freigibt, dass es aus der Nut der Saugplatte austreten kann, und somit die Verbindung löst. In diesem Fall funktioniert der Saugnapfhalter wie herkömmliche Halter auch, die die Kraft auf das Zugteil, das in der Mitte der Saugplatte sitzt, aufbringen.

Die Festigkeit eines Saugnapfes kann dadurch verstärkt werden, dass die Ansaugplatte vergrößert wird. Dies erfordert auch eine größere Kraft und in der Regel auch einen längeren Weg am Spannhebel. Alternativ können auch mehrere Saugnäpfe vorgesehen werden, die jeweils ihren eigenen Spannhebel haben und somit die Haltekraft erhöhen. Dies führt jedoch zu größeren Abmessungen der Saugnapfhalterung. Der Erfindung liegt die Erkenntnis zugrunde, dass an der Saugplatte eines Saugnapfes an mehreren zueinander beabstandeten Stellen, die Saugplatte angehoben werden kann. Die Hebeleinrichtung kann dafür so ausgebildet sein, dass Sie an mehreren beabstandeten Stellen die Saugplatte gegenüber einem Umfangsbereich der Saugplatte anhebt. Dadurch kann mit begrenztem Weg ein hoher Anpressdruck erzielt werden.

Gemäß der Erfindung weist der mittlere Bereich mehrerer Haltestempel auf.

Gemäß der Erfindung weist die Saugplatte eine von einer runden Form abweichende Form, wie beispielsweise eine ovale Form, auf. Es können jedoch auch Formen, wie etwa mit mehreren runden Kreisflächen, wie bei einem Blütenblatt, oder auch Formflächen verwendet werden, die für einen bestimmten Einsatz vorgesehen sind.

Eine erste Variante sieht vor, dass ein Hebel der Hebeleinrichtung an mehreren Stellen im mittleren Bereich der Saugplatte die Saugplatte anheben kann. Dabei wirkt ein einziger Hebel an mehreren zueinander beabstandeten Punkten der Saugplatte.

Gemäß der Erfindung weist die Hebeleinrichtung mehrere Hebel auf, um die Saugplatte an mehreren Stellen im mittleren Bereich der Saugplatte anzuheben.

Ein kompakter Aufbau wird erzielt, da die Hebeleinrichtung in entgegengesetzter Richtung um parallel angeordnete Achsen schwenkbare Hebel aufweist.

Um einen Hebel der Hebeleinrichtung leichter lösen zu können, wird vorgeschlagen, dass mindestens ein Hebel der Hebeleinrichtung eine flexible Löselasche aufweist, die unter dem Hebel in Verlängerung des Hebels angeordnet ist, um leicht greifbar das Lösen des Hebels zu erleichtern.

Zur Befestigung von beispielsweise einer Kamera oder eines Mobiltelefons am Saugnapf, wird vorgeschlagen, dass am Halterahmen eine lösbare Halterung angeordnet ist. Diese Halterung kann beispielsweise zwischen zwei in entgegengesetzter Richtung um parallel angeordnete Achsen schwenkbaren Hebeln angeordnet sein.

Um eine an einer glatten Oberfläche angesaugte Saugplatte nach lösen der Hebel leichter von der Oberfläche zu lösen, wird vorgeschlagen, dass die Saugplatte eine Löselasche aufweist, die weiter als die übrigen Bereiche der Saugplatte radial vom Halterahmen absteht.

Vorteilhaft ist es, wenn zwischen den Stellen der Hebeleinrichtung, an denen sie im mittleren Bereich der Saugplatte die Saugplatte anheben kann, ein Drucksensor angeordnet ist. Der Drucksensor kann auf einfache Art und Weise einen Parameter messen, der mit dem Druck, genauer gesagt dem Unterdruck, an dieser Stelle korreliert. Dies kann beispielsweise eine örtliche Spannung in der Saugplatte oder ein Abstand zwischen der Saugplatte und der ebenen Fläche sein.

Dieser Drucksensor kann auf unterschiedliche Art und Weise den Messwert an eine Anzeige oder Signaleinrichtung weitergeben. Eine einfache Ausführungsform sieht vor, dass der Drucksensor eine mechanische Druckanzeige aufweist. Dabei kann eine mechanische Formänderung mechanisch auf eine Anzeigeeinrichtung wirken. Dies kann beispielsweise ein Stab mit Markierungen sein, der in einer Hülse bewegt wird, sodass an der relativen Position zwischen Stab und Hülse der Druck abgelesen werden kann. Es kann aber auch an einer Stelle der Saugplatte ein Material verwendet werden, das je nach Spannung unterschiedlich gefärbt ist, um durch die Farbänderung ein Überschreiten eines bestimmten Unterdrucks anzuzeigen.

Vorteilhaft ist es, wenn der Drucksensor eine elektronische Druckanzeige aufweist. Hierfür können bekannte Einrichtungen verwendet werden, die einen Parameter messen, der mit dem Druck, genauer gesagt dem Unterdruck, an dieser Stelle korreliert.

Insbesondere für den Fall, dass der Drucksensor eine elektronische Druckanzeige aufweist, wird vorgeschlagen, dass der Drucksensor eine Sendeeinrichtung aufweist. Dies kann eine einfache Bluetooth-Schnittstelle sein, die die Information beispielsweise auf ein Mobiltelefon weitergibt, sodass das Mobiltelefon die Anzeige und/oder Signalfunktion übernehmen kann.

Eine besonders vorteilhafte Ausführungsvariante ist in der Zeichnung dargestellt und wird im Folgenden näher erläutert.

Es zeigt
- Figur 1: schematisch einen Schnitt durch eine nicht erfindungsgemäße Saugnapfhalterung,
- Figur 2: eine Saugnapfhalterung nach Figur 1 bei einer Krafteinwirkung auf das Gehäuse, die geringer ist als die definierte Auslösekraft,
- Figur 3: eine Saugnapfhalterung nach Figur 1 bei einer Krafteinwirkung auf das Gehäuse, die höher ist als die definierte Auslösekraft,
- Figur 4: eine Saugnapfhalterung mit zwei geschlossenen Hebeln,
- Figur 5: die in Figur 4 gezeigte Saugnapfhalterung mit offenen Hebeln,
- Figur 6: die Saugplatte der in Figur 4 gezeigten Saugnapfhalterung,
- Figur 7: die Saugnapfhalterung mit einem Haltearm an einer Fensterscheibe,
- Figur 8: eine Saugnapfhalterung mit planer Anzeige,
- Figur 9: die in Figur 8 gezeigte Saugnapfhalterung mit leicht vorstehender Anzeige und
- Figur 10: die in Figur 8 gezeigte Saugnapfhalterung mit deutlich vorstehender Anzeige.

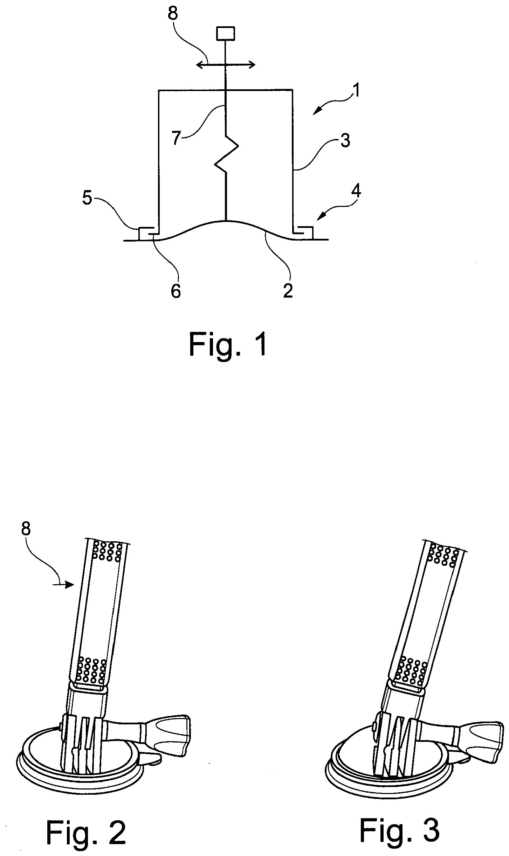

Die Figur 1 zeigt eine Saugnapfhalterung 1 mit einer Saugplatte 2 und einem Gehäuse 3. Die Saugplatte 2 und das Gehäuse 3 sind derart miteinander verbunden, dass das Gehäuse 3 an die Saugplatte 2 gepresst werden kann. Hierfür ist das Zugelement 7 vorgesehen. Die Saugplatte 2 hat eine umlaufende Verbindung 4 mit dem Gehäuse 3, die sich bei einer definierten auf das Gehäuse 3 wirkenden Auslösekraft löst.

Diese umlaufende Verbindung 4 ist als flexible Verbindung ausgebildet. Im Ausführungsbeispiel ist sie ringförmig als Nut und Feder-Verbindung ausgebildet, wobei die Nut 5 an der Saugplatte 2 und die Feder 6 am Gehäuse 3 angeordnet ist.

Die Saugplatte 2 und das Gehäuse 3 sind kreisförmig ausgebildet und der Durchmesser der Saugplatte 2 ist größer ist als der Durchmesser des Gehäuses 3.

Die Figur 2 zeigt, wie bis zu einer Maximalkraft 8 die Saugplatte 2 und das Gehäuse 3 fest verbunden bleiben und die Figur 3 zeigt, wie sich das Gehäuse bei Überschreiten einer Maximalkraft aus der Nut löst. Danach verhält sich die Halterung wie eine herkömmliche Halterung ohne Nut.

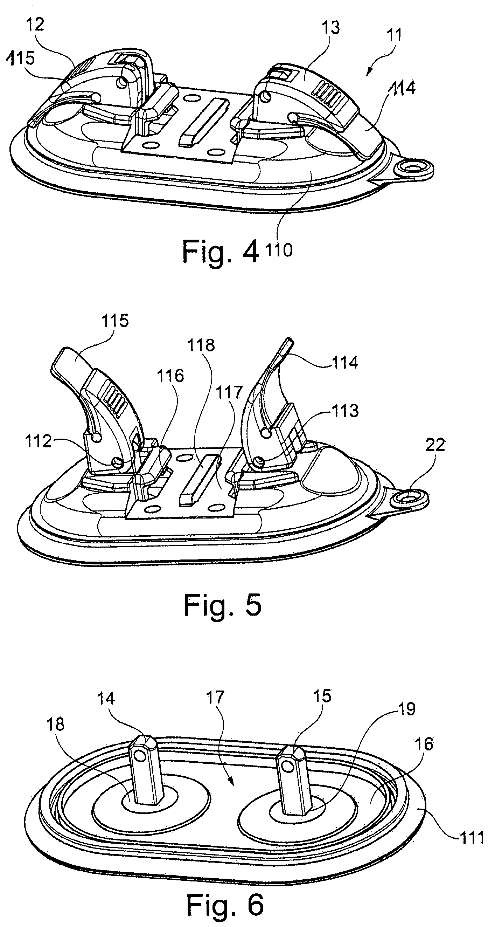

Die Figur 4 zeigt einen Saugnapf 11 mit zwei beabstandet zueinander angeordneten Hebeln 12, 13, die über Haltestempel 14, 15 auf die Saugplatte 16 wirken. Mittels den Hebeln 12, 13 können die Stempel 14, 15 angehoben werden, um die Saugplatte 16 in einem mittleren Bereich 17 an zwei Punkten 18, 19 anzuheben, während ein Halterahmen 110 die Saugplatte 16 im äußeren Bereich 111 nach unten auf eine nicht gezeigte Oberfläche presst.

Die Saugplatte ist länglich mit abgerundeten gegenüberliegenden Bereichen ausgebildet und die Hebel 12, 13 sind oberhalb dieser Saugplatte beabstandet zueinander um die Achsen 112 und 113 schwenkbar, um beim Einklappen der Hebel 12, 13 durch ein Schwenken der Hebel in entgegengesetzter Richtung um die Achsen 112 und 113 die Stempel 14 und 15 anzuheben. Die Hebel werden dabei um einen Totpunkt geschwenkt, um in eingeklappter Lage eine stabile Lage einzunehmen. Zum Lösen der eingeklappten Hebel 12, 13 sind Laschen 114, 115 vorgesehen, die als flexible Gummilaschen über die Hebel 12, 13 vorstehen, um die Hebel durch ein Ziehen an den Lasche 114, 115 leichter anheben zu können.

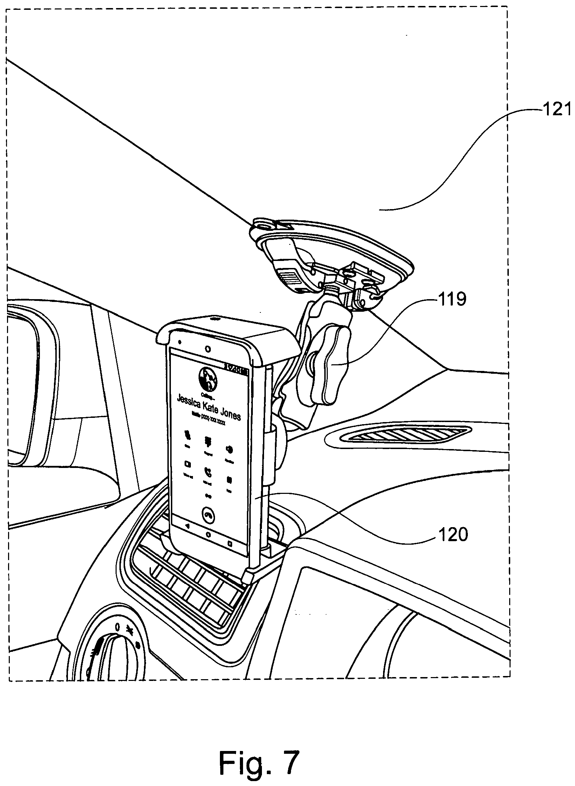

Die Figur 7 zeigt, wie in einem Haltebereich zwischen den Hebeln an zwei Nuten 116, 117 und einem dazwischen liegenden Steg 118 eine schenkbare Halterung 119 befestigt werden kann, an der im Ausführungsbeispiel ein Mobiltelefon 120 befestigt ist.

Um die Saugplatte 16 wieder von der Fensterscheibe 121 zu lösen, ist eine Löselasche 22 vorgesehen, die radial über den Halterahmen 110 vorsteht.

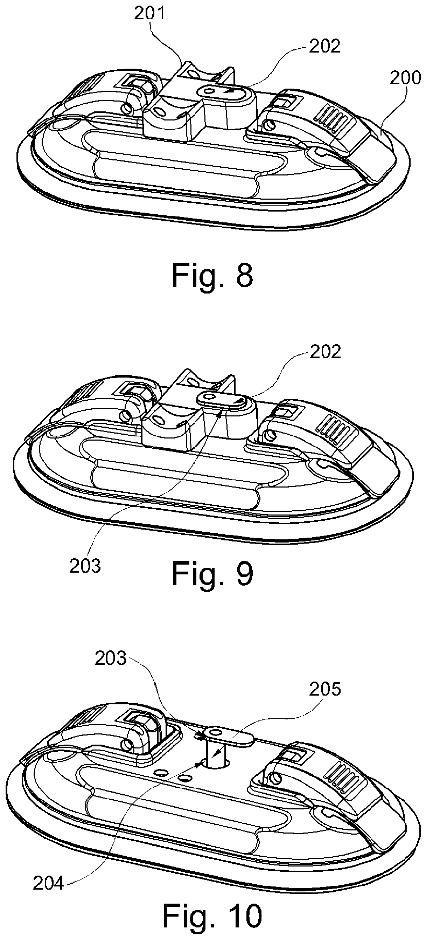

Die Figur 8 zeigt ein Gehäuse 200 mit einem Befestigungsaufsatz 201. Im mittleren Bereich des Gehäuses 200 ist als Teil eines Drucksensors 206 eine Druckanzeige 202 vorgesehen. Diese Druckanzeige ist bündig in das Gehäuse 200 integriert, so dass sie im Normalfall bei ausreichendem Anpressdruck nicht über die Gehäusefläche vorsteht.

Die Figur 9 zeigt, wie bei nachlassendem Anpressdruck die Saugplatte im mittleren Bereich angehoben wird und die daran befestigte Druckanzeige 202 nach oben wandert. Dadurch steht die Oberseite der Druckanzeige leicht über das Gehäuse vor. Dadurch wird eine seitliche rote Markierung 203 sichtbar, die Anzeigt, dass der Ansaugdruck bereits etwas nachgelassen hat. Das Vakuum zwischen der Auflagefläche, wie beispielsweise der Fensterscheibe 121 und der Saugplatte hat somit nachgelassen.

Die Figur 10 zeigt den Gehäusedurchbruch 204, in dem ein als Anzeigestößel ausgebildeter Stab 205 mit roter Markierung 203 je nach der Position der darunter liegenden Saugplatte auf und ab bewegbar ist, um die aktuelle Saugkraft anzuzeigen. In dem in Figur 10 dargestellten Ausführungsbeispiel ist der Befestigungsaufsatz 201 entfernt.

## Patentansprüche

1. Saugnapfhalterung (1) mit einer Saugplatte (2) und einem Gehäuse (3), wobei Saugplatte (2) und Gehäuse (3) derart miteinander verbunden sind, dass das Gehäuse (3) an die Saugplatte (2) gepresst werden kann, und einer Hebeleinrichtung (12, 13, 14, 15), um einen mittleren Bereich der Saugplatte (2) gegenüber einem Halterahmen (110), der sich auf einem Umfangsbereich der Saugplatte (2) abstützt, anzuheben, ***dadurch gekennzeichnet, dass*** die Saugplatte (2) eine von einer runden Form abweichende Form und insbesondere eine ovale Form aufweist, der mittlere Bereich (17) mehrere Haltestempel (14, 15) aufweist und die Hebeleinrichtung (12, 13, 14, 15) in entgegengesetzter Richtung um parallel angeordnete Achsen (112, 113) schwenkbare Hebel (12, 13) aufweist, um die Saugplatte (2) an mehreren Stellen im mittleren Bereich der Saugplatte (2) anzuheben.

2. Saugnapfhalterung nach Anspruch 1, ***dadurch gekennzeichnet, dass*** die umlaufende Verbindung (4) als flexible Verbindung ausgebildet ist.

3. Saugnapfhalterung nach Anspruch 1 oder 2, ***dadurch gekennzeichnet, dass*** die umlaufende Verbindung (4) als Sollbruchstelle ausgebildet ist.

4. Saugnapfhalterung nach einem der Ansprüche 1 bis 3, ***dadurch gekennzeichnet, dass*** die umlaufende Verbindung (4) als Nut und Feder-Verbindung ausgebildet ist.

5. Saugnapfhalterung nach Anspruch 4, ***dadurch gekennzeichnet, dass*** die Nut (5) an der Saugplatte (2) und die Feder (6) am Gehäuse (3) angeordnet ist.

6. Saugnapfhalterung nach einem der vorhergehenden Ansprüche, ***dadurch gekennzeichnet, dass*** die umlaufende Verbindung (4) ringförmig ausgebildet ist.

7. Saugnapf nach einem der vorhergehenden Ansprüche, ***dadurch gekennzeichnet, dass*** mindestens ein Hebel der Hebeleinrichtung (12, 13, 14, 15) eine flexible Löselasche (114, 115) aufweist, die unter dem Hebel (12, 13) in Verlängerung des Hebels angeordnet ist, um leicht greifbar das Lösen des Hebels (12, 13) zu erleichtern.

8. Saugnapf nach einem der vorhergehenden Ansprüche, ***dadurch gekennzeichnet, dass*** am Halterahmen (110) lösbar eine Halterung (119) angeordnet ist.

9. Saugnapf nach Anspruche 8, ***dadurch gekennzeichnet, dass*** die Halterung (119) zwischen den zwei in entgegengesetzter Richtung um parallel angeordnete Achsen schwenkbaren Hebeln (12, 13) angeordnet ist.

10. Saugnapf nach einem der vorhergehenden Ansprüche, ***dadurch gekennzeichnet, dass*** die Saugplatte (16) eine Löselasche (22) aufweist, die weiter als die übrigen Bereiche der Saugplatte(16) radial vom Halterahmen (110) absteht.

11. Saugnapf nach einem der vorhergehenden Ansprüche, ***dadurch gekennzeichnet, dass*** zwischen den Stellen der Hebeleinrichtung (12, 13, 14, 15), an denen sie im mittleren Bereich der Saugplatte (16) die Saugplatte anheben kann, ein Drucksensor angeordnet ist.

12. Saugnapf nach Anspruch 11, ***dadurch gekennzeichnet, dass*** der Drucksensor (206) eine mechanische Druckanzeige (202) aufweist.

13. Saugnapf nach Anspruch 12 oder 13, ***dadurch gekennzeichnet, dass*** der Drucksensor (206) eine elektronische Druckanzeige (207) aufweist.

14. Saugnapf nach einem der Ansprüche 12 bis 13, ***dadurch gekennzeichnet, dass*** der Drucksensor (206) eine Sendeeinrichtung (208) aufweist.

## Claims

1. A suction cup mount (1) with a suction plate (2) and a housing (3), wherein the suction plate (2) and the housing (3) are connected to each other in such a manner that the housing (3) can be pressed onto the suction plate (2), and a lever device (12, 13, 14, 15) in order to lift a middle region of the suction plate (2) with respect to a mount frame (110) which is supported on a circumferential region of the suction plate (2), ***characterized in that*** the suction plate (2) has a shape deviating from a round shape and, in particular, has an oval shape, the middle region (17) comprises a plurality of holding stamps (14, 15) and the lever device (12, 13, 14, 15) comprises levers (12, 13) that can be swiveled in opposite directions around axes (112, 113) arranged in parallel in order to lift the suction plate (2) in a plurality of places in the middle region of the suction plate (2).

2. The suction cup mount according to claim 1, ***characterized in that*** the circumferential connection (4) is designed as a flexible connection.

3. The suction cup mount according to claim 1 or 2, ***characterized in that*** the circumferential connection (4) is designed as a predetermined breaking point.

4. The suction cup mount according to any one of claims 1 to 3, ***characterized in that*** the circumferential connection (4) is designed as a tongue-and-groove connection.

5. The suction cup mount according to claim 4, ***characterized in that*** the groove (5) is arranged on the suction plate (2) and the tongue (6) is arranged on the housing (3).

6. The suction cup mount according to any one of the preceding claims, ***characterized in that*** the circumferential connection (4) is designed to be ringshaped.

7. The suction cup mount according to any one of the preceding claims, ***characterized in that*** at least one lever of the lever device (12, 13, 14, 15) comprises a flexible release tab (114, 115) which is arranged under the lever (12, 13) as an extension of the lever in order to facilitate the release of the lever (12, 13) in an easily tangible manner.

8. The suction cup mount according to any one of the preceding claims, ***characterized in that*** a mount (119) is detachably arranged on the mount frame (110).

9. The suction cup mount according to claim 8, ***characterized in that*** the mount (119) is arranged between the two levers (12, 13) that can be swiveled in opposite directions around axes arranged in parallel.

10. The suction cup mount according to any one of the preceding claims, ***characterized in that*** the suction plate (16) comprises a release tab (22) which radially protrudes further from the mount frame (110) than the remaining regions of the suction plate (16).

11. The suction cup mount according to any one of the preceding claims, ***characterized in that*** a pressure sensor is arranged between those places of the lever device (12, 13, 14, 15) at which the lever device can lift the suction plate (16) in the middle region of the suction plate.

12. The suction cup mount according to claim 11, ***characterized in that*** the pressure sensor (206) comprises a mechanical pressure indicator (202).

13. The suction cup mount according to claim 12 or 13, ***characterized in that*** the pressure sensor (206) comprises an electronic pressure indicator (207).

14. The suction cup mount according to any one of claims 12 to 13, ***characterized in that*** the pressure sensor (206) comprises a transmitting device (208).

## Revendications

1. Dispositif de retenue à ventouse (1) pourvu d'une plaque ventouse (2) et d'un boîtier (3), la plaque ventouse (2) et le boîtier (3) étant connectés l'un à l'autre de manière à ce que le boîtier (3) puisse être comprimé contre la plaque ventouse (2), et d'un dispositif à levier (12, 13, 14, 15) pour soulever une partie centrale de la plaque ventouse (2) par rapport à un cadre de retenue (110) qui s'appuie sur une zone circonférentielle de la plaque ventouse (2), ***caractérisé en ce que*** la plaque ventouse (2) présente une forme différente d'une forme ronde et en particulier une forme ovale, que la partie centrale (17) présente plusieurs poinçons de retenue (14, 15) et que le dispositif à levier (12, 13, 14, 15) présente des leviers (12, 13) pivotables dans un sens opposé autour d'axes disposés parallèlement (112, 113) pour soulever la plaque ventouse (2) par plusieurs endroits dans la partie centrale de la plaque ventouse (2).

2. Dispositif de retenue à ventouse selon la revendication 1, ***caractérisé en ce que*** la connexion périphérique (4) est réalisée sous forme d'une connexion souple.

3. Dispositif de retenue à ventouse selon la revendication 1 ou 2, ***caractérisé en ce que*** la connexion périphérique (4) est réalisée sous forme d'un point de rupture programmée.

4. Dispositif de retenue à ventouse selon une des revendications 1 à 3, ***caractérisé en ce que*** la connexion périphérique (4) est réalisée sous forme d'une connexion à tenon et mortaise.

5. Dispositif de retenue à ventouse selon la revendication 4, ***caractérisé en ce que*** la mortaise (5) est disposée au niveau de la plaque ventouse (2) et le tenon (6) au niveau du boîtier (3).

6. Dispositif de retenue à ventouse selon une des revendications précédentes, ***caractérisé en ce que*** la connexion périphérique (4) est réalisée en forme annulaire.

7. Dispositif de retenue à ventouse selon une des revendications précédentes, ***caractérisé en ce qu'***au moins un levier du dispositif à levier (12, 13, 14, 15) présente une languette de déblocage souple (114, 115) qui est disposée sous le levier (12, 13) dans le prolongement du levier pour faciliter le déblocage du levier (12, 13) de manière facilement préhensible.

8. Dispositif de retenue à ventouse selon une des revendications précédentes, ***caractérisé en ce que*** le support (119) est disposé de manière dissociable au niveau du cadre de retenue (110).

9. Dispositif de retenue à ventouse selon la revendication 8, ***caractérisé en ce que*** le support (119) est disposé entre les deux leviers (12, 13) pivotables en sens inverse autour d'axes disposés parallèlement.

10. Dispositif de retenue à ventouse selon une des revendications précédentes, ***caractérisé en ce que*** la plaque ventouse (16) présente une bride de déblocage (22) qui dépasse radialement du cadre de retenue (110) plus loin que les autres parties de la plaque ventouse (16).

11. Dispositif de retenue à ventouse selon une des revendications précédentes, ***caractérisé en ce que,*** entre les points du dispositif à levier (12, 13, 14, 15) par lesquels il peut soulever la plaque ventouse par la partie centrale de la plaque ventouse (16), un capteur de pression est disposé.

12. Dispositif de retenue à ventouse selon la revendication 11, ***caractérisé en ce que*** le capteur de pression (206) présente un indicateur de pression mécanique (202).

13. Dispositif de retenue à ventouse selon la revendication 12 ou 13, ***caractérisé en ce que*** l'indicateur de pression (206) présente un afficheur de pression électronique (207).

14. Dispositif de retenue à ventouse selon une des revendications 12 à 13, ***caractérisé en ce que*** le capteur de pression (206) présente un système d'envoi 208.
